# FASCICULE DE BREVET EUROPEEN

(11) **EP 0 323 315 B1**
(45) Date de publication et mention de la délivrance du brevet: **27.01.1993**
(21) Numéro de dépôt: 88403256.6
(22) Date de dépôt: 21.12.1988
(51) Int. Cl.: B65D 53/02, B65D 51/16, B29C 45/56

(54) **Conditionnement, tel que bouteille, bocal ou autre récipient similaire, joint d'étanchéité pour le dit conditionnement et procédé de fabrication du dit joint d'étanchéité**
Dichtungsring für Flasche, Gefäss o.d. und Verfahren zur Herstellung dieses Dichtungsrings
Sealing joint for a bottle, jar or similar container, and method of manufacturing this sealing joint

(30) Priorité: 29.12.1987 FR 8718535
(43) Date de publication de la demande: 05.07.1989
(73) Titulaire: VERRERIE CRISTALLERIE D'ARQUES J.G. DURAND & Cie SARL, F-62510 Arques (FR)
(72) Inventeur: Durand, Philippe, F-62510 Arques(Pas-de-Calais) (FR)
(74) Mandataire: Lepage, Jean-Pierre

(56) Documents cités:
- BE-A- 828 773
- DE-C- 323 935
- DE-C- 560 843
- DE-C- 812 501
- FR-A- 2 543 056
- FR-A- 2 587 002

## Description

L'invention est relative à un conditionnement, tel que bouteille, bocal ou autre récipient similaire, et à un joint d'étanchéité pour le dit conditionnement, ainsi qu'à un procédé de fabrication du dit joint d'étanchéité.

L'invention trouvera tout particulièrement son application dans le domaine de la fabrication des dispositifs à contenir pour l'emmagasinage ou le transport d'objets, de produits, de matériaux ou toutes substances quelconques ainsi que dans le domaine de la fabrication de joints d'étanchéité de tels dispositifs.

De plus, elle trouvera son utilisation dans divers domaines où il est nécessaire de conserver des produits ou toutes substances quelconques sous ambiance de vide ou de vide partiel. Une des principales applications non limitatives réside dans le domaine alimentaire. Toutefois, d'autres applications pourraient être envisagées telles que par exemple dans le domaine médical.

En effet, il est connu de longue date dans le domaine alimentaire de réaliser des conserves au moyen de conditionnements tels que bouteilles, bocaux ou autres récipients similaires constitués généralement par un contenant de forme adaptée et un couvercle articulé entre eux et verrouillés par un système de fermeture.

Par ailleurs, entre le contenant et le couvercle, on dispose généralement un joint d'étanchéité dont la fonction est double. En effet, il procure une première fonction lors de la confection des conserves proprement dites et une deuxième fonction lorsque la conserve a été entamée pour sa conservation ultérieure.

Les joints que l'on trouve actuellement dans le commerce sont réalisés par extrusion de caoutchouc naturel pur ou de caoutchouc chargé dans une filière qui présente une buse correspondant au profil du joint. On forme ainsi un boudin qui est ensuite tranché selon l'épaisseur du joint souhaitée.

Cela étant, pour réaliser de telles conserves, on utilise généralement la stérilisation du conditionnement rempli. Cette stérilisation provoque une évacuation quasi-totale de l'air restant dans le conditionnement, et une fois ce dernier refroidi, le couvercle est fortement appuyé sur le contenant par la pression atmosphérique.

En effet, lors de la stérilisation, il se produit dans le volume intérieur du dit conditionnement de la vapeur qui, au cours de cette phase, s'évacue du conditionnement en entrainant l'air résiduel. Au moment du refroidissement, le joint d'étanchéité et le système de fermeture empêchent l'air ou le liquide ambiant extérieur de rentrer dans le récipient pendant que la vapeur contenue dans le volume intérieur se condense. On se retrouve alors avec une pression intérieure dans le volume du conditionnement égale à la pression de vapeur saturante à température ambiante.

Cette pression intérieure peut descendre jusqu'à une valeur de quelques mn Hg de façon à être très nettement inférieure à la pression atmosphérique. Ainsi, compte tenu des dimensions du conditionnement, il n'est pas rare de voir des efforts de l'ordre de 50 kg s'appliquer sur le joint d'étanchéité, efforts provoqués par la dépression à l'intérieur du volume de conditionnement par rapport à l'air ambiant.

Le problème qui se pose alors est de vaincre cette force s'appliquant sur le joint pour ouvrir le conditionnement en vue, par exemple, de consommer le produit qui se trouve à l'intérieur.

A ce sujet, il est à remarquer qu'après stérilisation et refroidissement, le couvercle étant pressé contre le contenant de par la dépression interne, le système de fermeture peut être déverrouillé sans pour autant provoquer l'ouverture du conditionnement.

Pour permettre cette ouverture, généralement les joints d'étanchéité sont équipés d'une languette dépassant à l'extérieur du dit conditionnement. Cette languette peut alors être pincée et tirée fortement de manière à entrainer le joint vers l'extérieur et provoquer une entrée brutale de l'air dans le conditionnement pour autoriser son ouverture.

Toutefois, il est également à remarquer que, pour effectuer cette manoeuvre, il est nécessaire de développer une force de traction sur la languette telle que certains utilisateurs n'arrivent pas à ouvrir le conditionnement et parfois même détériorent ou déchirent le joint.

Pour pallier ce dernier inconvénient, de tels conditionnements ont été perfectionnés au niveau du système de fermeture et de verrouillage du couvercle sur le contenant.

En effet, il est connu des montures en fil métallique qui viennent ceinturer, d'une part, le corps du contenant, et d'autre part, le couvercle en permettant l'articulation et le verrouillage des deux éléments.

Par ailleurs, la dite monture comporte au niveau du système de verrouillage un levier de fermeture qui est réalisé tel qu'il puisse exercer lors de l'ouverture une force sur le couvercle par l'intermédiaire d'un bras de levier qui a pour but de démultiplier la force de la main.

Néanmoins, il est constant de voir certaines personnes qui n'arrivent pas à ouvrir le conditionnement à l'aide de ce système, et quelquefois, la dépression dan sle volume intérieur étant telle qu'on assiste au pliage du bras de levier pendant l'opération de verrouillage.

Plus récemment, pour faciliter l'ouverture de tels conditionnements, on a imaginé réaliser un joint d'étanchéïté présentant deux languettes extérieures séparées, au niveau de la bande d'étanchéïté, par une zone de résistance plus faible.

L'ouverture du conditionnement est autorisée après déverrouillage du couvercle par une traction simultanée sur les deux languettes pour les écarter l'une de l'autre afin d'essayer de déchirer le joint au niveau de sa zone de faiblesse.

Toutefois, si l'opérateur arrive à déchirer le dit joint, il est à remarquer que le conditionnement risque de s'ouvrir brutalement, et l'opérateur ayant ses deux mains occupées, ne maîtrise plus le dit conditionnement, ce qui n'est pas sans poser quelques problèmes.

De plus, le joint étant déchiré, ceci lui interdit toute utilisation pour la conservation ultérieure du produit après ouverture.

En résumé, toutes ces techniques d'ouverture présentent des inconvénients car elles fonctionnent bien souvent imparfaitement, nécessitent une force importante pour l'ouverture, rendent souvent le joint d'étanchéïté inutilisable ultérieurement et dépendent également de la qualité et du vieillissement de la matière constituant substantiellement le joint.

Par ailleurs, des documents DE-C-323.935, DE-C-560.843, ou FR-A-2.587.002, on connaît la réalisation de bocaux, aptes à contenir un produit ou toute substance quelconque sous ambiance de vide ou de vide partiel, constitué au moins d'un contenant et d'un couvercle entre lesquels est disposé un joint d'étanchéïté.

En outre, le joint, constitué par une bande de matière comprimable, porte des moyens de mise en communication de l'intérieur et de l'extérieur du conditionnement, d'une part obturés lors de la création du vide et/ou de son maintien, et d'autre part à être désobturés pour faciliter l'ouverture du dit conditionnement, afin de pouvoir réaliser à ce moment l'équilibrage des pressions entre l'intérieur et l'extérieur.

Ces moyens de mise en communication sont constitués par au moins un orifice, obturé et/ou obturable, prévu dans le plan du joint et dont l'axe est sécant par rapport à la paroi du contenant, accessible de l'extérieur du dit conditionnement pour permettre sa désobstruction.

De plus, compte tenu dela forte compression du joint, inhérente à la pression atmosphérique appliquant le couvercle sur le contenant, lorsqu'à l'intérieur réside une ambiance de vide ou de vide partiel, il est préconisé de renforcer l'orifice de communication en prévoyant un tube de renfort rapporté.

Cependant, ceci complique la réalisation du joint et en augmente son coût de revient.

En outre, jusqu'à ce jour, aucun procédé de fabrication d'un tel joint n'a vu le jour industriellement du fait de la difficulté de réalisation de l'orifice et des impératifs de moulage et d'extrusion à respecter.

Ainsi, ce problème existe depuis de très nombreuses années mais n'a jamais eu de solution commerciale industrielle à ce jour.

On connaît certes des documents BE-A-828.573 ou FR-A-2.543.056 des procédés pour la fabrication par injection de pièces moulées présentant des évidements, ces derniers étant réalisés pendant la phase de moulage par l'intermédiaire d'un poinçon ou d'une aiguille, escamotable dans le moule; toutefois mais ces procédés ne sont pas adaptés à la fabrication de joints d'étanchéïté selon la présente invention.

En effet, la succession des différentes étapes de ces procédés, et la structure des moules décrits ne permettent pas de transposer les enseignements à la réalisation d'un joint de faible épaisseur portant un orifice de communication de dimension réduite, située dans l'épaisseur du joint, et dont le diamètre est très faible par rapport à la longueur du conduit, qui nécessite l'emploi d'une aiguille fine et longue à escamoter dans le moule ou à introduire dans l'épaisseur du joint sans dérive ou casse.

Le but de la présente invention est de proposer un conditionnement, tel que bouteille, bocal ou autre récipient, apte à contenir un produit ou toute substance quelconque sous ambiance de vide ou de vide partiel, ainsi qu'un joint d'étanchéïté du dit conditionnement qui permettent de pallier ces différents inconvénients en autorisant une ouverture du conditionnement très facile et une réutilisation du joint pour l'utilisation du conditionnement ultérieurement après ouverture.

Un autre but de la présente invention est de proposer un conditionnement, apte à contenir un produit ou toute substance quelconque sous ambiance de vide ou de vide partiel, ainsi qu'un joint d'étanchéité pour le dit conditionnement qui soient d'une conception simple tout en présentant des avantages d'utilisation importants sans pour autant se répercuter de façon sensible sur le coût de revient du dit conditionnement.

Un autre but de la présente invention est de proposer un tel conditionnement qui, grâce à son joint d'étanchéité, demande une force très minime de l'opérateur pour rompre le vide à l'intérieur du conditionnement et autoriser son ouverture.

Un autre but de la présente invention est de proposer un procédé de fabrication d'un joint d'étanchéité conçu pour un tel conditionnement qui permette une réalisation du joint industriel, c'est-à-dire avec des cadences élevées, ce sans surcoût important.

A cet égard, un but de la présente invention est de proposer un procédé de moulage qui requiert des étapes spécifiques par rapport au procédé d'injection et aux techniques connues afin de pouvoir obtenir un joint parfaitement efficace sans parachêvement supplémentaire ou ralentissement de cadence.

D'autres buts et avantages de la présente invention apparaitront au cours de la description qui va suivre qui n'est cependant donnée qu'à titre indicatif et qui n'a pas pour but de la limiter.

Selon la présente invention, le conditionnement, tel que bouteille, bocal ou autre récipient, comprenant au moins un contenant et un couvercle entre lesquels est disposé un joint d'étanchéité, définissant un volume intérieur par rapport à l'extérieur du dit conditionnement, apte à contenir un produit ou toute substance quelconque sous ambiance de vide ou de vide partiel, le dit joint étant d'une part constitué par une bande de matière, notamment comprimable, définissant un plan de joint fermé au niveau de l'ouverture du contenant, et d'autre part portant des moyens de mise en communication du dit volume intérieur et de l'extérieur du conditionnement, obturés lors de la création du vide et/ou de son maintien, aptes à être désobturés pour faciliter l'ouverture du dit conditionnement, constitués par au moins un orifice (13), obturé et/ou obturable, prévu dans le plan du joint, et dont l'axe est sécant par rapport à la paroi du contenant, accessible de l'extérieur du dit conditionnement pour permettre sa désobstruction, le dit orifice étant équipé de moyens de renfort intérieur pour éviter que le volume interne du dit orifice ne s'obture du fait de la compression du joint pendant la phase de création du vide et/ou de son maintien, est caractérisé par le fait que les dits moyens de renfort intérieur sont constitués substantiellement par un profil de conduit polygonal, tel que triangle, carré, parallélélogramme, losange, demi-cercle, segment de cercle.

Par ailleurs, l'invention propose un joint d'étanchéïté qui trouvera notamment son application pour un conditionnement tel que défini ci-dessus, d'une part constitué par une bande de matière, notamment comprimable, définissant un plan de joint fermé, et d'autre part portant au moins un orifice, obturé et/ou obturable, prévu dans son épaisseur, dont l'axe est sécant à l'axe longitudinal de la bande, débouchant latéralement au moins sur un côté de la bande et accessible latéralement pour permettre sa désobstruction, le dit orifice étant équipé de moyens de renfort intérieur pour éviter que le volume interne du dit orifice ne s'obture pendant la phase de création du vide et/ou de son maintien du fait de la compression du joint, est caractérisé par le fait que les dits moyens de renfort intérieur sont constitués substantiellement par un profil de conduit polygonal tel que triangle, carré, parallélélogramme, losange, demi-cercle, segment de cercle.

Cela étant, la structure du joint d'étanchéïté de la présente invention n'autorise plus sa fabrication par extrusion, c'est pourquoi, un des buts de la présente invention est de proposer un procédé de fabrication d'un tel joint par injection de matière "moulable" dans un moule de forme adaptée au dit joint.

A ce sujet, l'homme du métier connaît différentes techniques et penserait soit à matérialiser le conduit par apport d'une matière différente ou encore en prévoyant dans la structure du moule même une réservation formant les dits moyens de mise en communication.

Cependant, une telle technique ne donne pas entièrement satisfaction car d'une part cela entraîne un parachèvement supplémentaire et d'autre part les joints obtenus n'ont pas une qualité suffisante pour être efficaces.

En effet, des essais effectués dans cette direction ont donné des joints d'étanchéïté avec une répartition de matière non uniforme et mauvaise qualité de conformation du dit orifice de communication.

C'est pourquoi, il a été mis au point un procédé de fabrication spécifique dans lequel le joint est obtenu par injection de caoutchouc naturel, synthétique ou de matière thermo-plastique par lequel dans un moule de forme adaptée, on injecte la matière, puis on introduit une tige ou une aiguille, escamotable dans le dit moule, dans l'épaisseur même du joint pour former le dit orifice, et on la maintient pendant le temps de la prise totale, avant de la retirer juste pour effectuer le démoulage.

En outre, selon l'invention, on guide la dite tige ou aiguille par le figement des faces supérieure et inférieure de la dite bande en contact avec le dit moule.

La présente invention sera mieux comprise à la lecture de la description suivante accompagnée des dessins qui en font partie intégrante.

La figure 1 représente une vue de profil d'un conditionnement selon un mode de réalisation de la présente invention.

La figure 2 montre une vue de dessus d'un premier mode de réalisation du joint d'étanchéité selon la présente invention apte à équiper par exemple un conditionnement tel que représenté à la figure 1.

La figure 3 montre une vue en coupe du joint représenté à la figure 2 selon l'axe III-III.

La figure 4 montre une vue de dessus d'un second mode de réalisation du joint d'étanchéité selon la présente invention.

La figure 5 montre une vue en coupe du joint d'étanchéité représenté à la figure 4 selon l'axe V-V.

La figure 6 montre un autre mode de réalisation du joint d'étanchéité de la présente invention vu de dessus.

La figure 7 montre une coupe du joint de la figure 6 selon l'axe VII-VII.

Les figures 8a à 8c montrent les différentes étapes spécifiques du procédé de fabrication du joint de la présente invention.

La figure 9 montre une vue en coupe du joint en cours de fabrication.

Les figures 10a à 10c montrent différentes réalisations du joint, selon l'axe X-X de la figure 9, et plus précisément différents profils possibles pour le conduit de communication.

L'invention vise un conditionnement, tel que bouteille, bocal ou autre récipient, et un joint d'étanchéité pour un tel conditionnement ainsi qu'à un procédé de fabrication du dit joint d'étanchéité.

Plus précisément, selon l'invention, le dit conditionnement est destiné à contenir un produit ou toute substance quelconque sous ambiance de vide ou de vide partiel pour, par exemple, conserver le dit produit ou substance.

Une première utilisation d'un tel conditionnement dans le domaine alimentaire permettra d'appliquer l'invention aux articles ménagers et industriels pour conservation.

Toutefois, l'invention pourrait être employée dans tout autre domaine où il est nécessaire de conserver un produit, objet, matière ou substance quelconque sous ambiance de vide ou de vide partiel pour son transport, ou son magasinage.

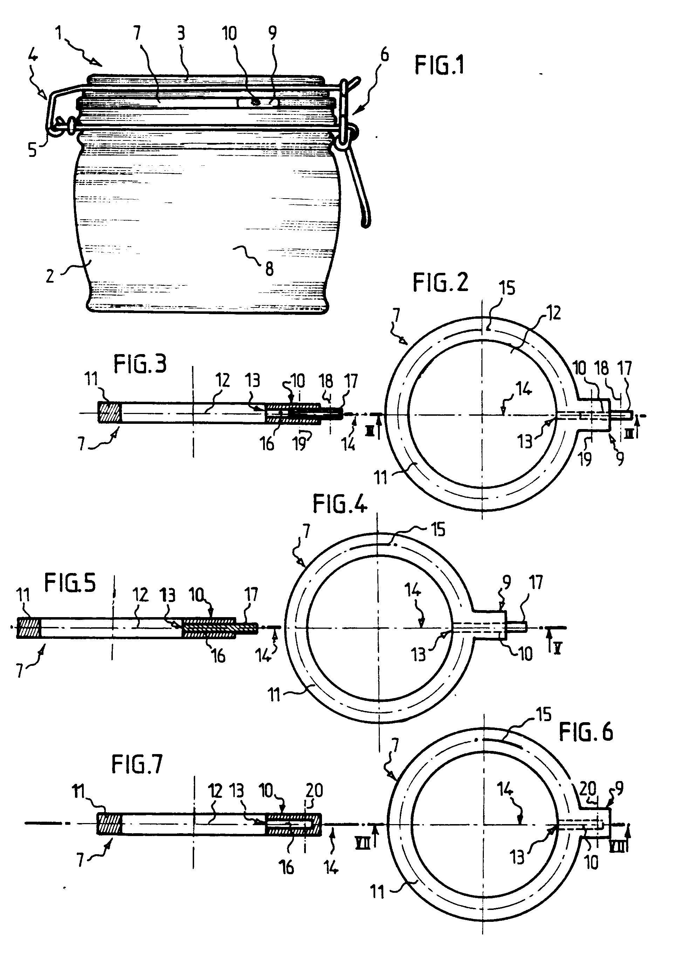

On connait de tels conditionnements, et à titre d'exemple, la figure 1 en illustre un qui se présente structurellement sous une forme de bocal. Néanmoins, d'autres formes pourraient être envisagées.

Le conditionnement 1 comprend essentiellement un contenant 2 qui, dans le cas présent, est formé par le corps du bocal, et un couvercle 3 adapté à la fermeture du dit contenant.

Par ailleurs, de tels conditionnements peuvent être équipés d'une monture métallique 4 qui présente à la fois un système d'articulation 5 du couvercle 3 sur le contenant 2 et un système de fermeture 6 à étrier et à levier qui permet notamment le verrouillage du couvercle sur le contenant.

De telles montures métalliques sont connues de l'Homme de l'Art et ne seront donc pas décrites plus en détail dans la présente demande. Sa fonction essentielle réside dans le maintien du couvercle sur le contenant pendant la phase de stérilisation par exemple.

Par ailleurs, dans les conditionnements connus à ce jour, une telle monture favorise également l'ouverture du conditionnement selon le principe rappelé ci-dessus. Toutefois, il est à noter que, grâce à la structure de la présente invention, cette seconde fonction n'est plus utilisée, et on pourrait envisager d'utiliser d'autres systèmes de fermeture dont la fonction nécessaire est l'application du couvercle sur le contenant pendant la phase de stérilisation.

En outre, pour réaliser l'étanchéité entre le couvercle 3 et le contenant 2, un joint 7 est prévu au niveau du bord supérieur de la paroi du contenant 2 afin de définir, quand le couvercle 3 est placé sur le dit contenant, un volume intérieur 8 par rapport à l'extérieur du dit conditionnement 1.

Jusqu'à présent, les caractéristiques décrites ci-dessus sont connues et de longue date, on utilise de tels bocaux, notamment en verre, pour la réalisation de conserves ménagères industrielles ou autres.

Par ailleurs, dans ces conditionnements, on prévoit, au niveau de la périphérie du joint d'étanchéité 7, une languette 9 qui facilitera notamment les opérations d'ouverture du conditionnement après que son volume intérieur 8 ait été vidé au moins partiellement de l'air ambiant.

Il est à noter que cette disposition de languette est actuellement traditionnelle sur les joints d'étanchéité connus; toutefois, selon la présente invention, on pourrait tout à fait imaginer de réaliser un tel joint sans languette.

Cela étant, selon la présente invention, le joint d'étanchéité 7 porte des moyens 10 de mise en communication du dit volume intérieur 8 et de l'extérieur du conditionnement 1.

Ces moyens 10 seront obturés lors de la formation du vide, par exemple pendant la phase de stérilisation. Ils seront également obturés lors du stockage du conditionnement avec maintien du vide.

Toutefois, ils seront aptes à être désobturés pour faciliter l'ouverture du dit conditionnement afin que l'opérateur puisse accéder dans le volume intérieur 8 pour récupérer le produit, matière ou substance contenu dans cette conserve.

Les différentes figures 2 à 7 montrent plusieurs modes de réalisation du joint d'étanchéité 7 selon la présente invention.

Dans tous ces modes de réalisation, le joint 7 est adapté à la configuration de l'ouverture du contenant 2 du conditionnement 1 qui, dans le cas présent, présente un profil circulaire.

Le joint 7 est constitué par une bande 11, de matière, notamment comprimable, dont l'axe longitudinal 15 correspond sensiblement à l'ouverture du contenant 2 en définissant un plan de joint fermé 12.

Selon le mode de réalisation décrit dans la présente demande, les dits moyens 10 de mise en communication du dit volume intérieur 8 et de l'extérieur du conditionnement 1 sont constitués par au moins un orifice 13, disposé dans le plan de joint, et prévu dans l'épaisseur de la bande 11, dont l'axe 14 est sécant par rapport à la paroi du contenant, schématisée par le trait mixte 15 sur les figures 2, 4 et 6, correspondant sensiblement à l'axe longitudinal de la dite bande.

Par ailleurs, cet orifice 13 est obturé et/ou obturable et accessible de l'extérieur du dit conditionnement 1 pour permettre sa désobstruction. En outre, il débouche latéralement au moins sur un côté de la bande et est accessible latéralement pour permettre sa désobstruction.

Cela étant, le dit orifice 13 comporte également des moyens de renfort intérieur pour éviter que le volume interne du dit orifice 13, c'est-à-dire la cavité formée dans la bande 11 par cet orifice 13, ne s'obture du fait de la compression du joint pendant la phase de création du vide et/ou de son maintien.

En effet, si tel était le cas, il serait alors impossible de mettre en communication l'intérieur du conditionnement et l'atmosphère extérieur.

Les figures 2 à 5 montrent deux premiers modes de réalisation dans lesquels le dit orifice 13 se présente sous la forme d'un conduit 16 de dimensions réduites, défini dans l'épaisseur 11 du joint, débouchant du côté du volume intérieur 8 du conditionnement c'est-à-dire vers l'intérieur du joint, et débouchant également à l'extérieur du dit conditionnement, c'est-à-dire à l'extérieur du joint.

Par ailleurs, pour obturer ce dit orifice 13, il présente un élément d'obturation 17, de forme adaptée au dit conduit 16, et placé à l'intérieur de celui-ci.

Afin d'autoriser l'accès au dit orifice 13 de l'extérieur du dit conditionnement 11, et permettre notamment sa désobstruction, le dit élément d'obturation 17 est tel qu'il dépasse du joint d'étanchéité, à l'extérieur du conditionnement, pour autoriser sa préhension par l'opérateur lorsqu'il cherchera à mettre en communication le dit volume intérieur 8 et l'extérieur du conditionnement 1.

Dans le mode de réalisation représenté aux figures 2 et 3, le dit élément d'obturation 17 est constitué substantiellement par un élément tubulaire dont une des extrémités est fermée obturant ainsi le dit orifice 13.

Lorsque l'opérateur souhaitera ouvrir le conditionnement, il lui suffira de rompre cette étanchéité au niveau de la partie fermée de l'élément 17 dépassante du joint. Par exemple, on pourrait envisager de réaliser cet élément d'obturation 17 tubulaire sous la forme d'un élément en matière synthétique apte à être coupé aux ciseaux.

En outre, on pourra prévoir l'ensemble conduit 16-élément d'obturation 17 au niveau de la dite languette 9 pour faciliter la localisation des dits moyens 10 de mise en communication.

Ainsi, l'opérateur voulant ouvrir un tel conditionnement, pourra, après avoir déverrouillé le couvercle 3 et le contenant 2, sectionner, soit l'extrémité de l'élément 17 selon l'axe de coupe repéré 18, soit l'ensemble languette et élément d'obturation selon l'axe repéré 19 aux figures 2 et 3.

Dans le mode de réalisation des figures 4 et 5, le dit élément d'obturation 17 est constitué par un élément filiforme plein de dimensions adaptées au conduit 16.

De même que dans le cas précédent, cet élément d'obturation 17 est légèrement dépassant du joint d'étanchéité à l'extérieur du conditionnement pour autoriser sa préhension par exemple entre le pouce et l'index afin d'effectuer une traction sur celui-ci et désobstruer l'orifice 13.

Un tel mode de réalisation permet éventuellement la réutilisation du joint d'étanchéité pour une phase ultérieure de stérilisation en replaçant après usage l'élément d'obturation 18 dans le conduit 16.

Il est à noter que dans les deux modes de réalisation précédents, les dits moyens de renfort intérieurs pour éviter que le volume interne du dit orifice 13 ne s'obture lors de la compression du joint, sont substantiellement constitués par le dit élément d'obturation 17.

Cependant, un tel mode de réalisation oblige l'utilisation d'une pièce supplémentaire, ce qui provoque un surcoût et un parachêvement du joint complémentaire.

Un autre mode de réalisation peut être également envisagé tel qu'illustré aux figures 6 et 7.

Dans ce cas, le dit orifice 13 se présente sous la forme d'un conduit de dimensions réduites 16, également défini dans l'épaisseur 11 du joint, mais prévu borgne pour constituer substantiellement l'obturation. En outre, cette disposition devra être telle que le dit conduit borgne 16 soit apte à être débouché par l'extérieur du dit conditionnement.

Dans le cas représenté sur les figures 6 et 7, le conduit 16 est disposé au niveau de la languette 9 du joint et est débouchant dans le dit volume intérieur 8, c'est-à-dire vers l'intérieur du joint.

Etant donné la localisation de l'orifice 13 dans la languette, cette dernière constituera avantageusement un repère, visible de l'extérieur du conditionnement, afin que l'utilisateur puisse localiser le dit orifice et permettre sa désobstruction au moment de l'ouverture du conditionnement.

A ce sujet, cette désobstruction peut être notamment faite par coupure de la languette selon l'axe 20 représenté aux figures 6 et 7.

Néanmoins, bien que la dite languette 9, prévue sur la périphérie du joint, et dépassant vers l'extérieur du dit conditionnement 1, soit intéressante, on pourrait tout à fait prévoir les moyens 10 de mise en communication selon la présente invention dans un joint ne présentant pas de languette.

Alors, afin de localiser le dit orifice 13, et permettre sa désobstruction, le dit joint 7 présentera un repère quelconque, visible de l'extérieur du conditionnement, remarquable par l'opérateur.

Par exemple, on pourrait envisager un repère coloré prévu au niveau du dit orifice afin que l'opérateur vienne piquer la bande du joint à ce niveau pour désobstruer le conduit 16.

Dans le cas de ce mode de réalisation, les dits moyens de renfort intérieur de l'orifice 13 sont constitués substantiellement par un profil du conduit 16 particulier tel qu'un profil polygonal à savoir triangle, carré, parallélogramme, losange, demi-cercle, segment de cercle.

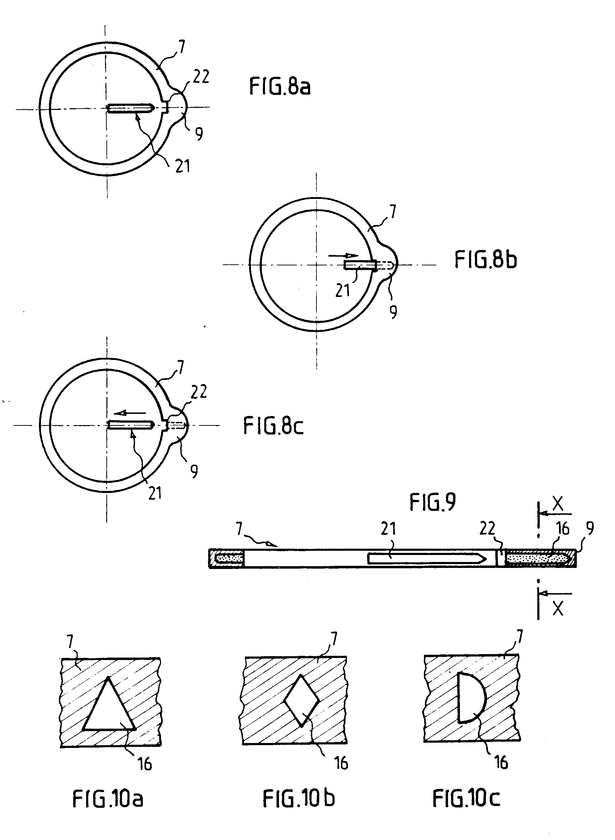

A ce sujet, les figures 10a à 10c montrent trois modes de réalisation respectivement triangle, losange, demi-cercle avec le diamètre dans le sens de l'épaisseur du joint, qui ont donné de bons résultats et qui permettent malgré la compression du couvercle sur le joint engendré par la présence du vide à l'intérieur du conditionnement maintiennent un canal non obturé sur toute la largeur du joint.

En ce qui concerne la structure même du joint d'étanchéité 7 de la présente invention, celui-ci sera avantageusement réalisé dans toute matière compressible telle que caoutchouc alimentaire ou toute autre matière synthétique ou composite.

A titre d'exemple, on a obtenu de bons résultats en utilisant des matières en élastomère thermoplastiques telles que notamment à base styrène, éthylène, butylène styrène.

L'avantage d'une telle réalisation consistera en la possibilité de découpage du joint au moyen de ciseaux par exemple ou encore de perçage au moyen d'aiguilles ou simplement de déchirure.

Quant aux dimensions du dit orifice 13, 16, celles-ci seront prévues par l'Homme de l Art en fonction des dimensions du joint, et de la pression exercée par le couvercle sur le contenant. Par ailleurs, il pourrait être également envisager, dans certains cas particuliers d'utiliser des conduits de sections autres que polygonales à savoir circulaires ou elliptiques.

En outre, on prévoira la matière du joint ou/et les dimensions ou/et la forme de l'orifice, en fonction de l'utilisation et du dimensionnement du contenant, afin d'éviter que le volume intérieur du conduit, comme précisé ci-dessus, ne soit obturé totalement lorsque le joint 7 sera comprimé entre le couverlce 3 et le contenant 2 par la dépression du volume intérieur 8.

Cependant, ce conduit aura naturellement une section réduite lors de la compression du joint, ce qui entrainera, au moment de la désobturation de l'orifice de mise en communication du volume intérieur avec l'extérieur, un appel d'air limité au début pour éviter d'avoir une ouverture trop brutale.

Les figures 8 et 9 montrent un mode de réalisation voisin de celui des figures 6 et 7. On notera cependant la présence d'un dégagement supplémentaire 22 dans le prolongement du conduit 16, côté intérieur du contenant, destiné à autoriser la communication volume intérieur-extérieur du conditionnement, rendu nécessaire dans certains cas si le chant intérieur du joint 7 est en contact direct avec une butée latérale prévue dans le couvercle pour maintenir le dit joint en place.

Les structures du joint d'étanchéité telles que décrites ci-dessus, interdisent son obtention par extrudage au-travers d'une filière puis tranchage car le dit orifice 13, obturé et/ou obturable dans la matière même du joint, n'est pas réalisable par un tel procédé.

Cependant, il est nécessaire d'obtenir un tel joint d'étanchéité industriellement, c'est-à-dire avec des cadences importantes sans surcoût notable de prix de revient.

On s'est donc dirigé vers la réalisation du joint d'étanchéité par injection de matière "moulable" dans un moule de forme adaptée au dit joint et en prévoyant une réservation dans le plan de la bande caoutchouc pour former le dit orifice 13.

Une telle technique est connue de l'homme du métier mais n'a pas donné de résultat satisfaisant. En effet, il a été constaté que lors de l'injection de la matière dans le moule, des perturbations importantes dans le flux de la matière ont donné naissance à une non homogénéité de celle-ci, ce qui est préjudiciable pour l'utilisation en tant que joint d'étanchéité.

Par ailleurs, la réservation prévue fixe dans le moule pour former le dit orifice n'était pas sans poser de nombreux problèmes thermiques et mécaniques.

En effet, compte tenu de la finesse obligatoire de la dite réservation, celle-ci chauffait de manière excessive et était soumise à des contraintes mécaniques trop importantes dues au flux de la matière.

C'est pourquoi, il a été imaginé un procédé spécifique pour réaliser le joint de la présente invention.

Le procédé de la présente invention consiste à réaliser le joint par injection de matière dans un moule de forme adaptée, et la réalisation du dit orifice 13, obturé et/ou obturable, dans la matière même du joint, est autorisée par l'intermédiaire d'une tige ou aiguille 21 escamotable dans le dit moule, ce pendant la phase de moulage.

A cet égard, les figures 8a à 8c et 9 illustrent certaines phases importantes du procédé de fabrication.

Ces étapes peuvent être résumées de la manière suivante :
- on injecte la matière à mouler dans le moule, la dite tige ou aiguille 21 étant escamotée, comme le montre notamment la figure 8a,
- dès que la matière a rempli complètement le moule, on introduit brutalement la dite tige ou aiguille 21 par l'intérieur du joint tel qu'illustré à la figure 8b,
- on maintient la dite tige ou aiguille dans l'épaisseur du joint 7 pendant le temps de prise totale de la matière,
- on retire la dite tige ou aiguille 21, juste avant le démoulage, comme le montre la figure 8c.

Cette façon de faire permet d'une part de ménager la tige ou aiguille qui n'est plus soumise à une surchauffe exagérée ni à des contraintes mécaniques trop importantes dues au flux de la matière lors de l'injection. Au contraire, on introduit dans la matière fluide chaude une aiguille refroidie, ce qui favorise la formation de la périphérie interne du conduit.

En effet, lorsqu'on remplit un moule, la matière en contact avec le métal du moule a tendance à figer rapidement, ce qui permet d'avoir un état de surface correct.

Cependant, si la matière se fige au contact du métal du moule, cette dernière reste fluide pendant un temps plus long au coeur du matériau, tel que le simule la figure 9 par les petits points.

Selon la présente invention, on utilise cette structure pour guider la tige ou aiguille grâce au figement des faces supérieure et inférieure du joint 7 en contact avec le métal du moule. On aménagera d'ailleurs l'extrémité de cette tige ou aiguille de manière à accentuer le phénomène de guidage.

Il est à noter que ces opérations de formation du conduit n'entrainent pas des prolongations de temps du cycle d'injection car en général, l'injection de telle matière fait toujours appel à des produits entrainant des cycles relativement longs dus au temps de prise de la matière juste après remplissage du moule. Ainsi, ce délai est mis à profit pour aménager le dit conduit.

Pour obtenir des profils de conduit aptes à constituer les dits moyens de renfort intérieurs précités, on adaptera la forme de la tige ou aiguille 21 à la forme de l'orifice à obtenir comme le montrent les figures 10a à 10c par exemple.

Naturellement, d'autres mises en oeuvre de la présente invention, à la portée de l'Homme de l'Art, auraient pu être envisagées sans pour autant sortir du cadre de celle-ci.

## Revendications

1. Procédé de fabrication d'un joint d'étanchéïté, conçu pour un conditionnement, tel que bouteille, bocal, ou autre récipient, comprenant au moins un contenant (2) et un couvercle (3) entre lesquels est disposé un joint d'étanchéïté (7), définissant un volume intérieur (8) par rapport à l'extérieur du dit conditionnement (1), le dit joint (7) étant d'une part constitué par une bande (11) de matière comprimable, définissant un plan de joint (12) fermé au niveau de l'ouverture du contenant (2), et d'autre part portant au moins un orifice (13), obturé et/ou obturable, prévu dans le plan (12) du joint, et dont l'axe (14) est sécant par rapport à la paroi (15) du contenant (2), accessible de l'extérieur du conditionnement, le dit joint (7) étant obtenu par injection de caoutchouc naturel, synthétique, ou de matière thermo-plastique, en mettant en oeuvre les étapes suivantes de procédé :
- dans un moule de forme adaptée au dit joint, on injecte la dite matière moulable,
- on introduit une tige ou aiguille (21) escamotable dans le dit moule, dans l'épaisseur même du joint, pour former le dit orifice (13),
- on maintient la dite tige ou l'aiguille (21) pendant le temps de la prise totale de la matière,
- on retire la dite tige ou aiguille (21) juste avant le démoulage du joint (7),
caractérisé par le fait que l'on guide la dite tige ou aiguille (21) par le figement des faces supérieure et inférieure de la dite bande en contact avec le metal du dit moule.

2. Procédé selon la revendication 1, caractérisé par le fait que la dite tige ou aiguille (21) présente un profil polygonal tel que triangle, carré, parallélélogramme, losange, demi-cercle, segment de cercle.

3. Procédé selon la revendication 1, caractérisé en ce que l'on injecte la matière à mouler dans le moule, la dite tige ou aiguille (21) étant escamotée, et dès que la matière remplit complètement le moule, on introduit brutalement la dite tige ou aiguille par l'intérieur du joint.

4. Procédé selon la revendication 3, caractérisé en ce que l'on introduit dans la matière fluide chaude une tige ou aiguille refroidie.

5. Conditionnement (1), tel que bouteille, bocal ou autre récipient, mettant en oeuvre un joint (7) d'étanchéïté notamment obtenu selon le procédé de la revendication 2, et comprenant au moins un contenant (2) et un couvercle (3) entre lesquels est disposé le dit joint (7), définissant un volume intérieur (8) par rapport à l'extérieur du dit conditionnement (1), apte à contenir un produit ou toute autre substance quelconque sous ambiance de vide ou de vide partiel, le dit joint (7) étant constitué par une bande (11) de matière comprimable, définissant un plan de joint (12) fermé au niveau de l'ouverture du contenant (2), et portant des moyens (10) de mise en communication du dit volume intérieur (8) et de l'extérieur du conditionnement (1), obturés lors de la création du vide et/ou de son maintien, aptes à être désobturés pour faciliter l'ouverture du dit conditionnement (1), constitués par au moins un orifice (13), obturé et/ou obturable, prévu dans le plan (12) du joint, et dont l'axe (14) est sécant par rapport à la paroi (15) du contenant (2), accessible de l'extérieur du dit conditionnement pour permettre sa désobstruction, le dit orifice (13) étant équipé de moyens de renfort intérieur pour éviter que le volume interne du dit orifice (13) ne s'obture du fait de la compression du joint pendant la phase de création du vide et/ou de son maintien, caractérisé par le fait que les dits moyens de renfort intérieur sont constitués substantiellement par un profil de conduit (16) polygonal, tel que triangle, carré, parallélélogramme, losange, demi-cercle, segment de cercle.

6. Conditionnement selon la revendication 5, caractérisé par le fait que le dit orifice (13) se présente sous la forme d'un conduit (16) de dimensions réduites, défini dans l'épaisseur (11) du joint, borgne, débouchant au moins dans le dit volume intérieur (8), apte à être débouché par l'extérieur du dit conditionnement (1).

7. Conditionnement, selon la revendication 5, caractérisé par le fait que le dit joint (7) présente un repère, visible de l'extérieur du conditionnement (1), afin de localiser le dit orifice (13) et permettre sa désobstruction pour faciliter l'ouverture du conditionnement (1).

8. Conditionnement, selon la revendication 7, caractérisé par le fait que le dit joint (7) présente sur sa périphérie une languette (9), dépassant vers l'extérieur du dit conditionnement (1), au niveau de laquelle sont disposés les dits moyens (10) de mise en communication et que le dit joint (7), au moins au niveau des dits moyens (10), est constitué en une matière apte à être sectionnée par l'utilisateur lors de l'ouverture du conditionnement pour désobstruer le dit orifice (13).

9. Joint d'étanchéïté (7), qui trouvera notamment son application pour un conditionnement conforme à la revendication 5, d'une part constitué par une bande (11) de matière comprimable, définissant un plan de joint (12) fermé, et d'autre part portant au moins un orifice (13), obturé et/ou obturable, prévu dans son épaisseur (11), dont l'axe (14) est sécant à l'axe longitudinal (15) de la bande, débouchant latéralement au moins sur un côté de la bande et accessible latéralement pour permettre sa désobstruction, le dit orifice (13) étant équipé de moyens de renfort intérieur pour éviter que le volume interne du dit orifice ne s'obture pendant la phase de création du vide et/ou de son maintien du fait de la compression du joint, caractérisé par le fait que les dits moyens de renfort intérieur sont constitués substantiellement par un profil de conduit (16) polygonal tel que triangle, carré, parallélélogramme, losange, demi-cercle, segment de cercle.

10. Joint d'étanchéïté selon la revendication 9, caractérisé par le fait qu'il est réalisé en matière élastomère thermoplastique telle stryrène, éthylène, butylène styrène.

## Claims

1. Process for manufacturing a seal, designed for a packing means, such as a bottle, jar or other recipient, including at least a container (2) and a lid or top (3) between which is disposed a seal (7), defining an internal volume (8) in relation to the outside of the said packing means (1), the said seal (7), one one hand, being formed by a strip (11) of compressible material, defining a seal plane (12) closed in the region of the opening of the container (2) and, on the other hand, having at least one orifice (13), blocked and/or blockable, provided in the plane (12) of the seal, and the axis (14) of which is secant in relation to the wall (15) of the container (2), accessible from outside the packing means, the said seal (7) being obtained through the injection of natural or synthetic rubber or thermoplastic material, by carrying out the following process steps:
- the said mouldable material is injected into a mould having a shape appropriate for the said seal,
- a retractable rod or needle (21) is introduced into the said mould, into the actual thickness of the seal, to form the said orifice (13),
- the said rod or needle (21) is held in place for the time taken for the material to set completely,
- the said rod or needle (21) is withdrawn just before the seal (7) is removed from the mould,
characterized by the fact that the said rod or needle (21) is guided by the solidifying of the upper and lower faces of the said strip in contact with the metal of the said mould.

2. Process according to claim 1, characterized by the fact that the said rod or needle (21) has a polygonal profile such as that of a triangle, square, parallelogram, lozenge, semicircle or the segment of a circle.

3. Process according to claim 1, characterized in that the material for moulding is injected into the mould, the said rod or needle (21) being retracted, and, immediately the material completely fills the mould, the said rod or needle is suddenly introduced through the inside of the joint.

4. Process according to claim 3, characterized in that a cooled rod or needle is introduced into the hot fluid material.

5. Packing means (1), such as a bottle, jar or other recipient, implementing a seal (7) obtained notably using the process according to claim 2, and including at least a container (2) and a lid or top (3) between which is disposed the said seal (7), defining an internal volume (8) in relation to the outside of the said packing means (1), suitable for containing a product or any other substance in a vacuum or partial vacuum, the said seal (7) being formed by a strip (11) of compressible material, defining a seal plan (12) closed in the region of the opening of the container (2), and having means (10) for placing the said internal volume (8) and the outside of the packing means (1) in communication, blocked when the vacuum is created and/or maintained, capable of being unblocked to facilitate the opening of the said packing means (1), constituted by at least one orifice (13), blocked and/or blockable, provided in the plane (12) of the seal, and the axis (14) of which is secant in relation to the wall (15) of the container (2), accessible from outside the said packing means to enable it to be unblocked, the said orifice (13) being provided with means of internal reinforcement to prevent the internal volume of the said orifice (13) from being blocked owing to the compression of the seal during the phase wherein the vacuum is created and/or maintained, characterized by the fact that the said internal reinforcement means are substantially formed by a conduit with a polygonal profile (16), such as that of a triangle, square, parallelogram, lozenge, semicircle or segment of a circle.

6. Packing means according to claim 5, characterized by the fact that the said orifice (13) takes the form of a conduit (16) of small dimensions, defined in the thickness (11) of the seal, one-ended, emerging at least in the said internal volume (8), capable of being unblocked from outside the said packing means (1).

7. Packing means according to claim 5, characterized by the fact that the said seal (7) has an identification mark, visible from the outside of the packing means (1), for the purpose of locating the said orifice (13) and enabling it to be unblocked in order to facilitate the opening of the packing means (1).

8. Packing means according to claim 7, characterized by the fact that the said seal (7) has on its periphery a tab (9), projecting outwardly of the said packing means (1), in the region of which are disposed the said communication means (10), and that the said seal (7), at least in the region of the said means (10), is formed of a material suitable for being sectioned by the user at the time of opening the packing means in order to unblock the said orifice (13).

9. Seal (7) which will find an application in particular in a packing means according to claim 5, formed, on one hand, by a strip (11) of compressible material, defining a closed seal plane (12) and, on the other hand, having at least one orifice (13), blocked and/or blockable, provided in its thickness (11), the axis (14) of which is secant to the longitudinal axis (15) of the strip, emerging laterally at least on one side of the strip and laterally accessible to enable it to be unblocked, the said orifice (13) being provided with means of internal reinforcement to prevent the internal volume of the said orifice from being blocked during the phase in which the vacuum is created and/or maintained owing to the compression of the seal, characterized by the fact that the said internal reinforcement means are substantially constituted by a conduit (16) with a polygonal conduit such as that of a triangle, square, parallelogram, lozenge, semicircle or segment of a circle.

10. Seal according to claim 9, characterized by the fact that it is made of a thermoplastic elastomeric material such as styrene, ethylene, or butylene styrene.

## Patentansprüche

1. Verfahren zur Herstellung eines Dichtungsringes, der entworfen ist für einen Verpackungsbehälter, wie Flasche, Glasgefäß oder sonstiges Gefäß, der mindestens einen Behälter (2) und einen Deckel (3) umfaßt, zwischen denen ein Dichtungsring (7) angeordnet ist, der ein Innenvolumen (8) bezüglich der Außenseite des genannten Verpackungsbehälters (1) definiert, wobei die genannte Dichtung (7), einerseits, aus einem zusammendrückbaren Materialstreifen (11) besteht, der eine im Bereich der Öffnung des Behälters (2) geschlossene Dichtungsebene (12) definiert, und, andererseits, mindestens ein von der Außenseite des Verpackungsbehälters zugängliches, in der Ebene (12) der Dichtung vorgesehenes, verschlossenes und/oder verschließbares Loch (13) trägt, dessen Achse (14) bezüglich der Wand (15) des Behälters (2) schneidend ist, wobei die genannte Dichtung (7) durch Einspritzen von Natur-, Kunstkautschuk oder thermoplastischem Material erhalten wird, indem die nachfolgenden Verfahrensstufen angewandt werden:
- in eine Gießform einer der genannten Dichtung angepaßten Gestalt wird das genannte formbare Material eingespritzt,
- eine herausziehbare Stange oder Nadel (21) wird in die Gießform, in die Dicke der Dichtung, hineingeführt, zum Bilden des genannten Lochs (13),
- die genannte Stange oder Nadel (21) wird während der sämtlichen Erstarrungszeit des Materials behalten,
- die genannte Stange oder Nadel (21) wird gerade vor dem Herausnehmen der Dichtung (7) aus der Form herausgezogen,
dadurch gekennzeichnet, daß die genannte Stange oder Nadel (21) durch die Eindickung der oberen und unteren Flächen des genannnten Streifens in Berührung mit dem Metall der genannten Gießform geführt wird.

2. Verfahren nach Anspruch 1, dadurch gekennzeichnet, daß die genannte Stange oder Nadel (21) ein vieleckiges Profil, wie Dreieck, Quadrat, Parallelogramm, Rhombus, Halbzirkel, Kreisabschnitt, aufweist.

3. Verfahren nach Anspruch 1, dadurch gekennzeichnet, daß das zu formende Material in die Gießform eingespritzt wird, wobei die genannte Stange oder Nadel (21) herausgezogen ist, und die genannte Stange oder Nadel (21), sobald das Material die Gießform völlig füllt, gewaltsam durch das Innere der Dichtung hineingeführt wird.

4. Verfahren nach Anspruch 1, dadurch gekennzeichnet, daß in das heiße flüssige Material eine gekühlte Stange oder Nadel hineingegührt wird.

5. Verpackungsbehälter (1), wie Flasche, Glasgefäß oder sonstiges Gefäß, der einen nämlich nach dem Verfahren des Anspruchs 2 erhaltenen Dichtungsring (7) verwendet und mindestens einen Behälter (2) und einen Deckel (3) umfaßt, zwischen denen der genannten Dichtungsring (7) angeordnet ist, der ein Innenvolumen (8) bezüglich der Außenseite des genannten Verpackungsbehälters (1) definiert und geeignet ist, ein Produkt oder irgendwelche sonstige Substanz unter Vakuum oder Teilvakuum zu enthalten, wobei die genannte Dichtung (7) aus einem zusammendrückbaren Materialstreifen (11) besteht, der eine im Bereich der Öffnung des Behälters (2) geschlossene Dichtungsebene (12) definiert, und während dem Erzeugen des Vakuums und/oder dessen Aufrechterhaltung verschlossene Mittel (10) zum Verbinden des genannten Innenvolumens (8) mit der Außenseite des Verpackungsbehälters (1) trägt, die geeignet sind, freigemacht zu werden, um das Öffnen des genannten Verpackungsbehälters zu erleichtern, und aus mindestens einem in der Ebene (12) der Dichtung vorgesehenes, verschlossenes und/oder verschließbares Loch (13) bestehen, das, zum Erlauben dessen Freimachung, von der Außenseite des Verpackungsbehälters zugänglich ist und dessen Achse (14) bezüglich der Wand (15) des Behälters (2) schneidend ist, wobei das genannte Loch (13) mit Innenverstärkungsmitteln versehen ist, zum Vermeiden, daß das Innenvolumen des genannten Lochs (13) durch die Zusammendrückung der Dichtung während der Phase der Erzeugung des Vakuums und/oder dessen Aufrechterhaltung verschlossen wird, dadurch gekennzeichnet, daß die gennanten Innenverstärkungsmittel im wesentlichen aus einem vieleckigen Leitungsprofil (16), wie Dreieck, Quadrat, Parallelogramm, Rhombus, Halbkreis, Kreisabschnitt, besteht.

6. Verpackungsbehälter nach Anspruch 5, dadurch gekennzeichnet, daß das genannte Loch (13) als eine blinde, in der Dicke (11) der Dichtung definierte Leitung (16) geringer Abmessungen ausgestaltet ist, die mindestens in das Innenvolumen (8) endet und geeignet ist, von der Außenseite des genannten Verpackungsbehälters (1) freigemacht zu werden.

7. Verpackungsbehälter nach Anspruch 5, dadurch gekennzeichnet, daß die genannte Dichtung (7) ein von der Außenseite des Verpackungsbehälters (1) sichtbares Zeichen aufweist, zum Lokalisieren des genannten Lochs (13) und zum Erlauben dessen Freimachung, um das Öffnen des Verpackungsbehälters zu erleichtern.

8. Verpackungsbehälter nach Anspruch 7, dadurch gekennzeichnet, daß die genannte Dichtung (7) an deren Umkreis eine nach außen aus dem genannten Verpackungsbehälter (1) herausragende Lasche (9) umfaßt, im Bereich wovon die genannten Verbindungsmittel (10) angeordnet sind, und daß die genannte Dichtung (7) zumindest im Bereich der genannten Mittel (10) aus einem Material besteht, das geeignet ist, beim Öffnen des Verpackungsbehälters vom Verbraucher abgeschnitten zu werden, um das genannte Loch (13) freizumachen.

9. Dichtungsring (7), der nämlich seine Anwendung für einen Verpackungsbehälter nach Anspruch 5 finden wird und, einerseits, aus einem zusammendrückbaren Materialstreifen (11) besteht, der eine geschlossene Dichtungsebene (12) definiert, und, andererseits, mindestens ein in deren Dicke (11) vorgesehenes, verschlossenes und/oder verschließbares Loch (13) trägt, dessen Achse (14) die Längsachse (15) des Streifens (15) schneidet, das seitlich mindestens an einer Seite des Streifens endet und, zum Erlauben dessen Freimachung, seitlich zugänglich ist, wobei das genannte Loch (13) mit Innenverstärkungsmitteln versehen ist, zum Vermeiden, daß das Innenvolumen des genannten Lochs durch die Zusammendrückung der Dichtung während der Phase der Erzeugung des Vakuums und/oder dessen Aufrechterhaltung verschlossen wird, dadurch gekennzeichnet, daß die gennanten Innenverstärkungsmittel im wesentlichen aus einem vieleckigen Leitungsprofil (16), wie Dreieck, Quadrat, Parallelogramm, Rhombus, Halbkreis, Kreisabschnitt, besteht.

10. Dichtungsring nach Anspruch 9, dadurch gekennzeichnet, daß er aus thermoplastischem Elastomermaterial, wie Styren, Äthylen, Butylenstyren, hergestellt ist.
